# EUROPÄISCHE PATENTSCHRIFT

(11) **EP 2 170 578 B1**
(45) Veröffentlichungstag und Bekanntmachung des Hinweises auf die Patenterteilung: **27.03.2013**
(21) Anmeldenummer: 08786018.5
(22) Anmeldetag: 10.07.2008
(51) Int. Cl.: B29C 45/34, B29C 44/34

(54) **ENTLÜFTUNGSVORRICHTUNG UND VERFAHREN ZUM ENTLÜFTEN**
VENTING DEVICE AND METHOD
DISPOSITIF ET PROCÉDÉ D'ÉVACUATION D'AIR

(30) Priorität: 26.07.2007 DE 102007035386
(43) Veröffentlichungstag der Anmeldung: 07.04.2010
(73) Patentinhaber: Takata AG, 63743 Aschaffenburg (DE)
(72) Erfinder: LIEBMANN, Ralf, 63834 Sulzbach (DE)
(74) Vertreter: Baumgärtel, Gunnar
(86) Internationale Anmeldenummer: PCT/EP2008/058961
(87) Internationale Veröffentlichungsnummer: WO 2009/013139

(56) Entgegenhaltungen:
- DE-A1- 2 212 609
- DE-A1- 10 153 159
- FR-A- 2 857 898

## Beschreibung

Die Erfindung betrifft eine Entlüftungsvorrichtung für eine Spritzgussform, insbesondere für Schäumformen für Lenkräder, gemäß dem Oberbegriff des Anspruchs 1 sowie ein Verfahren zum Entlüften einer solchen Spritzgussform.

Wird ein Spritzgussmaterial in die Kavität einer Spritzgussform eingeleitet um ein Formteil herzustellen, so muss die in der Kavität befindliche, durch das Spritzgussmaterial verdrängte Luft durch zumindest eine Entlüftungsöffnung der Spritzgussform, über die die Kavität mit einem die Spritzgussform umgebenden Außenraum kommuniziert, aus der Kavität abgelassen werden. Hierbei besteht das Problem, das zusammen mit der abzulassenden Luft Spritzgussmaterial aus der Entlüftungsöffnung austritt. Dieser Austrieb muss nach dem Erstarren des Spritzgussmaterials entfernt werden.

Aus der FR 2 857 898 ist eine Entlüftungsvorrichtung bekannt, bei in einer Entlüftungsöffnung oder mehreren Entlüftungsöffnungen der Kavität jeweils ein Kolben mit Spiel in einer Entlüftungsöffnung geführt ist. In einer Entlüftungsstellung des Kolbens kann Luft entlang des Kolbens aus der Kavität entweichen. Um im Anschluss in die Entlüftungsöffnung gelangtes Material aus der Entlüftungsöffnung zu entfernen, ist der Kolben aus der Entlüftungsstellung in Richtung auf die Kavität verschiebbar. Auf diese Weise schiebt der Kolben in der Entlüftungsöffnung befindliches Material in die Kavität zurück.

In der DE 101 53 159 A1 wird eine Entlüftungsvorrichtung beschrieben, bei der ein Ventilstift zwischen zwei Endpositionen in einer Öffnung verschieblich geführt ist. In einer ersten Endposition des Ventilstifts kann über in dem Ventilstift vorgesehene Kanäle Luft aus einer Spritzgussform ins Freie entweichen. Um vor einem weiteren Spritzgussvorgang in den Kanälen des Ventilstifts eventuell vorhandenes Spritzgussmaterial zu entfernen, ist der Ventilstift in eine zweite Endposition überführbar. Bei der Bewegung von seiner ersten in seine zweite Endposition wird der Ventilstift an einem Bereich der Entlüftungsvorrichtung vorbeigeführt, an dem in den Kanälen des Ventilstifts befindliches Spritzgussmaterial abgestreift wird. Im Anschluss wird der Ventilstift erneut in seine erste Endposition zur Entlüftung der Spritzgussform bewegt.

Der Erfindung liegt daher das Problem zugrunde, eine Entlüftungsvorrichtung bereitzustellen, bei der der Spritzgussmaterialaustrieb reduziert.

Dieses Problem wird durch eine Entlüftungsvorrichtung mit den Merkmalen des Anspruchs 1 gelöst.

Danach ist eine Entlüftungsvorrichtung zum Entlüften einer mit Spritzgussmaterial befüllbaren Kavität einer Spritzgussform über eine Entlüftungsöffnung der Spritzgussform vorgesehen, mit einem eine Durchgangsöffnung aufweisendem Gehäuse, das zur Anlage an der Spritzgussform eingerichtet und vorgesehen ist derart, dass aus der Kavität verdrängte Luft, die beim Einleiten von Spritzgussmaterial in die Kavität aus der Entlüftungsöffnung der Spritzgussform austritt, durch die Durchgangsöffnung des Gehäuses hindurch in einen die Spritzgussform umgebenden Außenraum entweichen kann, mit einem entlang einer Erstreckungsrichtung längs erstreckten Ventilstift, der entlang seiner Erstreckungsrichtung bewegbar im Gehäuse gelagert ist, wobei der Ventilstift dazu ausgebildet ist, aus einer Entlüftungsstellung, in der der Ventilstift derart in der Durchgangsöffnung angeordnet ist, dass aus der Entlüftungsöffnung der Spritzgussform austretende Luft entlang des Ventilstifts durch die Durchgangsöffnung hindurch in den Außenraum entweichen kann, in Richtung auf die Kavität in eine erste Reinigungsstellung bewegt zu werden, wobei in die Durchgangsöffnung gelangtes Spritzgussmaterial vom Ventilstift mitgenommen und aus der Durchgangsöffnung heraus gestoßen wird, und wobei der Ventilstift dazu ausgebildet ist, aus der ersten Reinigungsstellung von der Kavität weg in eine zweite Reinigungsstellung bewegt zu werden, wobei an dem Ventilstift anhaftendes Spritzgussmaterial durch ein am Gehäuse vorgesehenes Abstreifelement vom Ventilstift entfernt wird.

Mit anderen Worten ist eine Entlüftungsvorrichtung zum Entlüften einer mit Spritzgussmaterial befüllbaren Kavität einer Spritzgussform über eine Entlüftungsöffnung der Spritzgussform vorgesehen, mit einem eine Durchgangöffnung aufweisenden Gehäuse, das zur Anordnung an einer Spritzgussform eingerichtet und vorgesehen ist, einem sich entlang einer Erstreckungsrichtung längs erstreckenden Ventilstift, der entlang seiner Erstreckungsrichtung bewegbar im Gehäuse gelagert ist. Dabei ist der Ventilstift aus einer Entlüftungsstellung, in der er in die Entlüftungsöffnung der Spritzgussform hineinragt, so dass aus der Entlüftungsöffnung austretende Luft entlang des Ventilstifts durch die Durchgangsöffnung hindurch in einen die Spritzgussform umgebenden Außenraum entweichen kann, in Richtung auf die Kavität in eine erste Reinigungsstellung bewegbar. In dieser ersten Reinigungsstellung ragt ein freier Endabschnitt aus der Durchgangsöffnung heraus vollständig in die Kavität. Weiterhin ist der Ventilstift dabei von der ersten Reinigungsstellung von der Kavität weg in eine zweite Reinigungsstellung bewegbar, wobei er an einem Gehäuse vorgesehenem Abstreifelement vorbeiführbar ist.

Bei dem Spritzgussmaterial kann es sich um alle erdenklichen Werkstoffe handeln, die in eine eine Negativform ausbildende Kavität einer Spritzgussform einleitbar sind, um ein der Negativform entsprechendes Formteil herzustellen. Das Material wird in einem fließfähigen Zustand in die Kavität eingebracht und erstarrt dann zu dem herzustellenden Formteil. Die vorliegende Entlüftungsvorrichtung eignet sich insbesondere für Schäumformen von Lenkrädern, insbesondere deren Lenkradkränze.

Vorzugsweise ist der Ventilstift entlang seiner Erstreckungsrichtung in einen Hauptabschnitt und einen gegenüber dem Hauptabschnitt im Querschnitt verjüngten, insbesondere abgeflachten freien Endabschnitt unterteilt, wobei der freie Endabschnitt des Ventilstiftes in der Entlüftungsstellung jenes Ventilstiftes vorzugsweise die Durchgangsöffnung durchgreift. Hierbei bildet die abgeflachte Seite mit der Durchgangsöffnung einen Kanal, durch den die aus der Kavität entweichende Luft in den Außenraum abgeleitet wird. Vorzugsweise ist der Hauptabschnitt ebenso wie die Durchgangsöffnung (und die Entlüftungsöffnung) im Querschnitt kreisförmig, wobei die abgeflachte Seite des Endabschnittes durch eine plane, entlang der Erstreckungsebene verlaufende Fläche gebildet ist.

Bevorzugt ragt der Ventilstift - bezogen auf einen bestimmungsgemäß an der Spritzgussform angeordneten Zustand des Gehäuses der Entlüftungsvorrichtung - in seiner Entlüftungsstellung soweit entlang seiner Erstreckungsrichtung aus der Durchgangsöffnung heraus, dass sein freier Endabschnitt in die Entlüftungsöffnung hinein reicht, wobei der Endabschnitt entlang seiner Erstreckungsrichtung vorzugsweise jedoch nicht in die Kavität selbst hineinragt. In einer Variante der Erfindung ist der Ventilstift dazu ausgebildet, in seiner Entlüftungsstellung mit seinem freien Endabschnitt bündig mit der Entlüftungsöffnung der Spritzgussform abzuschließen, also gerade nicht in die Kavität hinein zu stehen.

Bei einem In der ersten Reinigungsstellung angeordneten Ventilstift ist vorgesehen, dass der freie Endabschnitt des Ventilstifts so weit entlang seiner Erstreckungsrichtung aus der Durchgangsöffnung herausragt, dass er vollständig in der Kavität angeordnet ist, wobei der Hauptabschnitt des Ventilstifts in der Durchgangsöffnung angeordnet ist. Damit der Hauptabschnitt beim Durchgreifen der Durchgangsöffnung darin befindliches Spritzgussmaterial entfernen kann, weist der Hauptabschnitt des Ventilstifts zumindest einen Bereich auf, der einen der Durchgangsöffnung entsprechenden (insbesondere kreisförmigen) Querschnitt aufweist, so dass in die Durchgangsöffnung gelangtes Spritzgussmaterial beim Bewegen des Ventilstiftes aus der Entlüftungsstellung in die erste Reinigungsstellung durch jenen Bereich aus der Durchgangsöffnung heraus gedrückt wird.

Zweckmäßigerweise ist die Durchgangsöffnung in einem Boden des Gehäuses ausgebildet, über den das Gehäuse an der Spritzgussform befestigbar ist, wobei bevorzugt der Boden zur formschlüssigen Anlage an der Spritzgussform ausgebildet ist. Des Weiteren ist am Boden vorzugsweise eine mit der Durchgangsöffnung kommunizierende, quer zur Erstreckungsrichtung verlaufende Auslassöffnung vorgesehen, die in einem an der Spritzgussform bestimmungsgemäß angeordneten Zustand der Entlüftungsvorrichtung außerhalb der Spritzgussform mündet. Über die Auslassöffnung kann somit in der Kavität befindliche Luft in den die Spritzgussform umgebenden Außenraum entweichen.

Gleichzeitig dient die Auslassöffnung als Anschluss für eine Pumpe, insbesondere Vakuumpumpe, mittels der in der Kavität befindliche Luft aus der Kavität herausgepumpt werden kann. Dies kann vor einem Befüllen der Kavität mit Spritzgussmaterial vorgenommen werden, so dass sich das Spritzgussmaterial besser in der Kavität verteilen kann, oder während des Befüllens der Kavität mit Spritzgussmaterial, um das Entweichen von Luft aus der Kavität zu beschleunigen.

Damit der Ventilstift beim Bewegen in seine zweite Reinigungsstellung vollständig am Abstreifelement vorbeibewegt werden kann, ist der Endabschnitt in der zweiten Reinigungsstellung des Ventilstiftes außerhalb der Durchgangsöffnung in einem durch das Gehäuse definierten Innenraum des Gehäuses angeordnet. Folglich ist der Ventilstift dann mit seinem Endabschnitt vollständig am Abstreifelement vorbeibewegbar, um beim Bewegen in die zweite Reinigungsstellung am Endabschnitt des Ventilstiftes haftendes Spritzgussmaterial abzustreifen. Vorzugsweise ist das Abstreifelement quer zur Erstreckungsrichtung des Ventilstiftes verstellbar am Gehäuse angeordnet, so dass stets eine optimale Anlage des Abstreifelements, insbesondere am freien Endabschnitt des Ventilstifts, erzielbar ist.

Vorzugsweise ist die Entlüftungsvorrichtung zur Anordnung an der Spritzgussform eingerichtet und vorgesehen derart, dass die Durchgangsöffnung entlang der Erstreckungsrichtung deckungsgleich auf der Entlüftungsöffnung der Spritzgussform zu liegen kommt. Hierdurch kann der Ventilstift stets auch zur Reinigung der Entlüftungsöffnung der Spritzgussform verwendet werden.

Zum Bewegen des Ventilstiftes zwischen den einzelnen Stellungen des Ventilstiftes ist eine erste und eine zweite separat mit einem Strömungsmittel beaufschlagbare Kammer des Gehäuses vorgesehen, die durch ein entlang der Erstreckungsrichtung abdichtend im Gehäuse gleitendes erstes Dichtelement voneinander getrennt sind, an dem der Ventilstift befestigt ist.

Hierbei wird bevorzugt das erste Dichtelement bei einem in der Entlüftungsstellung befindlichen Ventilstift beim Beaufschlagen der zweiten Kammer mit einem Strömungsmittel entlang der Erstreckungsrichtung zum Boden hin verschoben, wobei der Ventilstift in seine erste Reinigungsstellung mitgenommen wird.

Des Weiteren weist das Gehäuse eine dritte Kammer auf, die durch eine quer zur Erstreckungsrichtung verlaufende Zwischenwand von der zweiten Kammer getrennt ist, wobei ein zweites Dichtelement entlang der Erstreckungsrichtung gleitend in der dritten Kammer geführt ist, das bevorzugt in der Entlüftungsstellung des Ventilstiftes an der Zwischenwand positioniert ist, die die zweite Kammer von der dritten Kammer trennt.

Zum Bewegen des Ventilstiftes aus der ersten Reinigungsstellung in die zweite Reinigungsstellung wird die erste Kammer mit einem Strömungsmittel beaufschlagt, so dass das erste Dichtelement entlang der Erstreckungsrichtung in Richtung auf die Zwischenwand verlagert wird, wobei der Ventilstift in seine zweite Reinigungsstellung mitgenommen wird.

Um eine Rückbewegung des Ventilstiftes in die Entlüftungsstellung zu ermöglichen, wirkt das zweite Dichtelement mit dem ersten Dichtelement derart zusammen, dass das zweite Dichtelement zu einer der Zwischenwand gegenüberliegenden Oberseite des Gehäuses verlagert wird, wenn das erste Dichtelement bei einem in der ersten Reinigungsstellung befindlichen Ventilstift beim Beaufschlagen der ersten Kammer mit einem Strömungsmittel entlang der Erstreckungsrichtung in Richtung auf die Zwischenwand verlagert wird.

Wird nun das zweite Dichtelement bei einem in der zweiten Reinigungsstellung befindlichen Ventilstift mit einem Strömungsmittel von der Oberseite her in Richtung auf die Zwischenwand mit Druck beaufschlagt, so wird das erste Dichtelement aufgrund der besagten Kopplung zwischen den beiden Dichtelementen von der Zwischenwand in Richtung auf den Boden verschoben, wobei der Ventilstift in seine Entlüftungsstellung mitgenommen wird.

Die Kopplung zwischen den beiden Dichtelementen wird bevorzugt durch eine vom zweiten Dichtelement in Richtung auf den Boden abragende Hülse und einen in der Hülse entlang der Erstreckungsrichtung gleitend geführten Bolzen gebildet, der in Richtung auf die Oberseite des Gehäuses vom ersten Dichtelement absteht, wobei die Hülse eine mittig an der Zwischenwand ausgebildete, durchgängige Öffnung der Zwischenwand durchgreift, so dass die Kopplung über die Zwischenwand hinweg funktioniert. Vorzugsweise fluchtet jene Öffnung der Zwischenwand mit der Durchgangsöffnung und der Entlüftungsöffnung.

Besonders bevorzugt weist der Ventilstift quer zur Erstreckungsrichtung lediglich einen Durchmesser von maximal 2 mm auf. Hierdurch wird verhindert, dass auf dem herzustellenden Formteil ein Abdruck des Ventilstiftes entsteht.

Des Weiteren wird das erfindungsgemäße Problem durch ein Verfahren mit den Merkmalen des Anspruchs 14 gelöst.

Danach umfasst ein Verfahren zum Entlüften einer mit Spritzgussmaterial befüllbaren Kavität einer Spritzgussform über eine Entlüftungsöffnung der Spritzgussform, insbesondere unter Verwendung einer erfindungsgemäßen Entlüftungsvorrichtung, die folgenden Schritte: Positionieren der Entlüftungsvorrichtung bezüglich der Entlüftungsöffnung der Spritzgussform so dass die Durchgangsöffnung mit der Entlüftungsöffnung der Spritzgussform kommuniziert, Bewegen des Ventilstiftes in seine Entlüftungsstellung, so dass Luft beim Einleiten von Spritzgussmaterial in die Kavität durch die Entlüftungsöffnung aus der Kavität austreten und entlang des Ventilstifts durch die Durchgangsöffnung hindurch in einen die Spritzgussform umgebenden Außenraum entweichen kann, Bewegen des Ventilstifts in seine erste Reinigungsstellung nachdem die Kavität mit Spritzgussmaterial befüllt wurde, so dass in die Durchgangsöffnung gelangtes Spritzgussmaterial vom Ventilstift mitgenommen und aus der Durchgangsöffnung ausgestoßen wird, und Bewegen des Ventilstifts in die zweite Reinigungsstellung, wobei an dem Ventilstift anhaftendes Spritzgussmaterial durch das Abstreifelement vom Ventilstift entfernt wird.

Zum Beaufschlagen der Kammern mit einem Druck wird vorzugsweise in einer Druckluftquelle gespeicherte oder durch diese erzeugbare Druckluft in die Kammern eingeleitet. Andere Strömungsmittel, insbesondere flüssige sind ebenfalls denkbar. Der Ventilstab kann alternativ auch elektromotorisch bewegt werden.

Vorzugsweise wird die Kavität über die Entlüftungsvorrichtung auch evakuiert, indem z.B. an eine mit der Durchgangsöffnung kommunizierende Auslassöffnung des Gehäuses der Entlüftungsvorrichtung eine Pumpe angelegt wird, mittels der in der Kavität befindliche Luft aus der Kavität herausgepumpt werden kann.

Ein weiterer Gedanke der Erfindung ist die Bereitstellung einer Anordnung mit einer erfindungsgemäßen Entlüftungsvorrichtung und einer wie vorstehend beschriebenen daran angepassten Spritzgussform, insbesondere einer Schäumform für ein Lenkrad (Lenkradkranz), wobei das in die Kavität der Schäumform einzuleitende Spritzgussmaterial ein Schaum ist.

Weitere Einzelheiten und Vorteile der Erfindung werden bei der nachfolgenden Beschreibung von Ausführungsbeispielen anhand der Figuren deutlich werden.

Es zeigen:
- Fig. 1: eine geschnittene Ansicht einer erfindungsgemäßen Entlüftungseinrichtung zum Entlüften einer Kavität einer Spritzgussform über eine Entlüftungsöffnung der Spritzgussform, mit einem in einer Durchgangsöffnung der Entlüftungsvorrichtung geführten Ventilstift, der in einer Entlüftungsstellung angeordnet ist, so dass aus der Kavität verdrängte und aus der Entlüftungsöffnung austretende Luft entlang des Ventilstiftes durch die Durchgangsöffnung hindurch aus der Kavität entweichen kann;
- Fig. 2: eine weitere geschnittene Ansicht der in der Figur 1 gezeigten Entlüftungsvorrichtung, wobei der Ventilstift in einer ersten Reinigungsstellung angeordnet ist, in der der Ventilstift in die zu entlüftende Kavität der Spritzgussform hineinragt; und
- Fig. 3: eine weitere geschnittene Ansicht der in der Figuren 1 und 2 gezeigten Entlüftungsvorrichtung, wobei der Ventilstift in einer zweiten Reinigungsstellung angeordnet ist, in der der Ventilstift zum Abstreifen an einem Abstreifelement vollständig aus der Durchgangsöffnung herausgezogen ist.

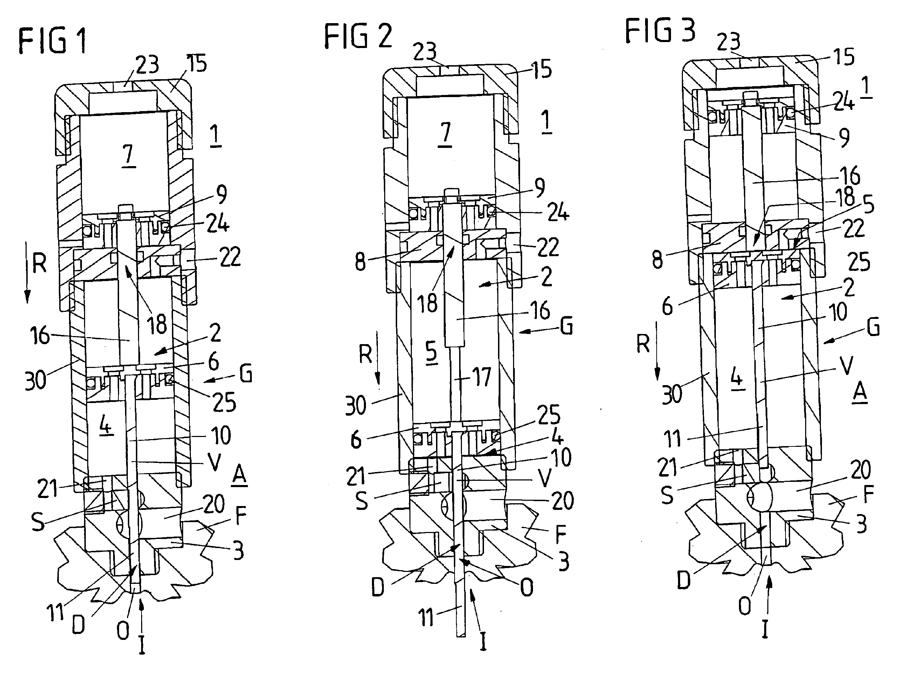

Fig. 1 zeigt im Zusammenhang mit den Figuren 2 und 3 eine geschnittene Ansicht einer Entlüftungsvorrichtung 1, die zum Entlüften einer durch eine Spritzgussform F umgebenen Kavität I der Spritzgussform F über eine Entlüftungsöffnung O der Spritzgussform F dient, durch die Luft aus der Kavität I in einen die Spritzgussform F umgebenen Außenraum A entweichen kann.

Die Entlüftungsvorrichtung 1 weist ein Gehäuse G als einen Träger des Entlüftungsmechanismus auf, das zur Befestigung an der zu entlüftenden Spritzgussform F eingerichtet und vorgesehen ist. Das Gehäuse G ist entlang einer Erstreckungsrichtung R längs erstreckt ausgebildet und weist eine Wandung 30 auf, die sich zwischen einem zur Anlage an der Spritzgussform F ausgebildeten und quer zur Erstreckungsrichtung R erstreckten Boden 3 und einer quer zur Erstreckungsrichtung R erstreckten Oberseite 15 des Gehäuses G, entlang der Erstreckungsrichtung R erstreckt. Die Wandung 30 kann insbesondere hohlzylinderförmig ausgebildet sein.

Der Boden 3 des Gehäuses G ist zur formschlüssigen Anordnung in einer Ausnehmung der Spritzgussform F ausgebildet, insbesondere kann der Boden 3 in jene Ausnehmung eingeschraubt werden bzw. darin in sonstiger Weise befestigt werden.

Im Boden 3 ist eine Durchgangsöffnung D ausgebildet, die entlang der Erstreckungsrichtung R verläuft und in dem an der Spritzgussform F bestimmungsgemäß angeordneten Zustand der Entlüftungseinrichtung 1 bzw. des Gehäuses G deckungsgleich mit einer Entlüftungsöffnung O der Spritzgussform F angeordnet ist. Dabei fluchtet die Durchgangsöffnung D mit der Entlüftungsöffnung O der Spritzgussform F. Somit kann aus der Kavität I verdrängte Luft durch die Entlüftungsöffnung O aus der Kavität I austreten, wobei jene Luft direkt in die entlang der Erstreckungsrichtung R verlaufende Durchgangsöffnung D gelangt. Die Durchgangsöffnung D ist mit einer quer zur Erstreckungsrichtung R verlaufenden, am Boden 3 vorgesehenen sackförmigen Auslassöffnung 20 verbunden, die in dem an der Spritzgussform F bestimmungsgemäß angeordneten Zustand der Entlüftungsvorrichtung 1 außerhalb der Kavität I am Gehäuse G mündet, so dass aus der Entlüftungsöffnung O der Kavität I entweichende Luft über die Durchgangsöffnung D (und die Auslassöffnung 20) in einen die Spritzgussform F umgebenen Außenraum A abgeleitet werden kann. Die Durchgangsöffnung D kann natürlich auch auf andere Weise mit dem Außenraum A verbunden werden.

Damit in die Kavität I eingeleitetes Spritzgussmaterial nicht ebenfalls durch die Durchgangsöffnung D hindurch aus der Entlüftungsöffnung O Kavität I austreten kann, ist ein entlang der Erstreckungsrichtung R längs erstreckter zylindrischer Ventilstift V vorgesehen, mit einem abgeflachten freien Endabschnitt 11, der von einem im Querschnitt kreisförmigen Hauptabschnitt 10 des Ventilstiftes V abgeht. Der Ventilstift V ist entlang seiner Erstreckungsrichtung R verschieblich im Gehäuse G gelagert und mittels einer Bewegungserzeugungsvorrichtung entlang der Erstreckungsrichtung R bewegbar, wobei der Ventilstift V in einer Entlüftungsstellung derart positioniert ist, dass der freie, abgeflachte Endabschnitt 11 des Ventilstiftes V die Durchgangsöffnung D durchgreift, deren Innendurchmesser dem Außendurchmesser des Hauptabschnittes 10 des Ventilstiftes V entspricht. Dabei bildet der Endabschnitt 11 mit der Durchgangsöffnung D einen engen Kanal, durch den Luft entlang des Endabschnittes 11 aus der Entlüftungsöffnung O der Kavität I (über die Auslassöffnung 20) entweichen kann, jedoch kein Spritzgussmaterial. In der Entlüftungsstellung ragt der freie Endabschnitt 11 des Ventilstiftes V ferner in die Entlüftungsöffnung O hinein, so dass insbesondere kein Spritzgussmaterialaustrieb (Pilz) an der Entlüftungsöffnung O entstehen kann (vgl. Figur 1).

Allerdings kann Spritzgussmaterial in geringen Mengen entlang des abgeflachten Bereiches des freien Endabschnittes 11 in die Durchgangsöffnung D gelangen und dabei auch am freien Endabschnitt 10 des Ventilstiftes V haften bleiben.

Es besteht daher die Notwenigkeit zur Reinigung der Durchgangsöffnung D (ggf. auch der Entlüftungsöffnung O) sowie des Ventilstiftes V. Hierzu wird der Ventilstift V mittels der Bewegungserzeugungsvorrichtung entlang der Erstreckungsrichtung R aus dem Gehäuse G heraus in eine erste Reinigungsstellung bewegt, in der der Endabschnitt 11 des Ventilstiftes V vollständig in der Kavität I angeordnet ist, so dass der Hauptabschnitt 10 des Ventilstiftes V sowohl die Durchgangöffnung D als auch die Entlüftungsöffnung O durchgreift. Da der Hauptabschnitt 10 einen der Durchgangöffnung D (und der deckungsgleichen Entlüftungsöffnung O) entsprechenden Durchmesser aufweist (bzw. eine entsprechende Querschnittsfläche) nimmt der Hauptabschnitt 10 beim Bewegen des Ventilstiftes V in die erste Reinigungsstellung in der Durchgangöffnung O befindliches Spritzgussmaterial mit und reinigt somit die Durchgangsöffnung D (vgl. Figur 2).

Zum Reinigen des Ventilstabes V selbst wird der Ventilstab V hiernach in das Gehäuse G zurück in eine zweite Reinigungsstellung gezogen, und zwar über die Entlüftungsstellung hinaus, so dass ein freies Ende des Endabschnittes 11 des Ventilstiftes V entlang der Erstreckungsrichtung R beabstandet zur Durchgangsöffnung D angeordnet wird. Dies ermöglicht es, die abgeflachte Seite des Endabschnittes 11 des Ventilstiftes V beim Bewegen des Ventilstiftes V in dessen zweite Reinigungsstellung, vollständig an einem Abstreifelement S vorbei zu bewegen, so dass an dem Endabschnitt 11 haftendes Spritzgussmaterial beim Zurückziehen des Ventilstiftes V in die zweite Reinigungsstellung vom Endabschnitt 11 des Ventilstiftes V abgestreift werden kann. Das Abstreifelement S ist quer zur Erstreckungsrichtung R justierbar ausgebildet und justiert sich bei Verschleiß automatisch nach, so dass das Abstreifen des am Ventilstift V anhaftenden Spritzgussmaterials sichergestellt ist. Hierzu kann das Abstreifelement S mittels eines Federmittels gegen den Ventilstift V vorgespannt sein.

Die Bewegungserzeugungsvorrichtung zum Bewegen des Ventilstiftes V zwischen den vorstehend beschriebenen Stellungen wird durch drei Kammern 4, 5, 7 des Gehäuses G gebildet, die mittels eines Strömungsmittels, insbesondere Druckluft, separat beaufschlagbar sind.

Zum Bewegen des Ventilstiftes V aus der Entlüftungsposition in die erste und zweite Reinigungsposition sind eine erste und eine zweite Kammer 4, 5 des Gehäuses G vorgesehen, die durch ein erstes Dichtelement 6 voneinander getrennt sind. Das erste Dichtelement 6 ist dazu ausgebildet entlang der Erstreckungsrichtung R an einer dem Innenraum des Gehäuses G zugewandten Innenseite der Wandung 30 entlang zu gleiten, wobei das erste Dichtelement 6 durch die Wandung 30 entlang der Erstreckungsrichtung R geführt ist. Zum Abdichten der ersten Kammer 4 gegenüber der zweiten Kammer 5 ist am ersten Dichtelement 6 ein jenes Dichtelement 6 umlaufender Dichtring 25 vorgesehen, der in einer Nut des ersten Dichtelementes 6 quer zur Erstreckungsrichtung R am ersten Dichtelement 6 umläuft und abdichtend an der Innenseite der Wandung 30 anliegt.

Die erste Kammer 4 grenzt an den Boden 3 an; die zweite Kammer 5 liegt auf der dem Boden 3 abgewandten Seite des ersten Dichtelementes 6. Durch Einleiten eines Strömungsmittels in die zweite Kammer 5 durch eine der zweiten Kammer 5 zugeordnete, an der Wandung 30 vorgesehene Einlassöffnung 22, wird das erste Dichtelement 6 mit Druck beaufschlagt und infolgedessen in Richtung auf den Boden 3 verlagert, bis es an den Boden 3 anschlägt. Dabei ist der Ventilstab V über seinen Hauptabschnitt 10 derart am ersten Dichtelement 6 festgelegt, dass er beim Verlagern des ersten Dichtelementes 6 in seine erste Reinigungsposition mitgenommen wird.

Hiernach wird die auf ein verschwindendes Volumen komprimierte erste Kammer 4 durch Einleiten eines Strömungsmittels durch eine der ersten Kammer 4 zugeordnete Einlassöffnung 21 des Gehäuses G mit Druck beaufschlagt, so dass das erste Dichtelement 6 entlang der Erstreckungsrichtung R in Richtung auf eine Zwischenwand 8 des Gehäuses verlagert wird, bis das erste Dichtelement 6 an jener Zwischenwand 8 anschlägt. Hierbei wird der Ventilstift V in die zweite Reinigungsposition mitgenommen. Die Zwischenwand 8 erstreckt sich quer zur Erstreckungsrichtung R und trenn die dritte Kammer 7 von der zweiten Kammer 5 ab.

Zum Zurückbewegen des Ventilstiftes V aus der zweiten Reinigungsposition in die Entlüftungsstellung dient die dritte Kammer 7. Darin ist ein zweites Dichtelement 9 vorgesehen, dass dazu ausgebildet ist, entlang der Erstreckungsrichtung R an der dem Innenraum des Gehäuses G zugewandten Innenseite der Wandung 30 entlang zu gleiten, wobei das zweite Dichtelement 9 durch die Wandung 30 entlang der Erstreckungsrichtung R geführt ist. Zur abdichtenden Anlage des zweiten Dichtelementes 9 an der Wandung 30 ist am zweiten Dichtelement 9 ein umlaufender Dichtring 24 vorgesehen, der in einer Nut des zweiten Dichtelementes 9 quer zur Erstreckungsrichtung R am zweiten Dichtelement 9 umläuft.

Das zweite Dichtelement 9 ist mittels einer vom zweiten Dichtelement 9 entlang der Erstreckungsrichtung R in Richtung auf den Zwischenboden 8 abragenden Hülse 16, die durch eine mit der Durchgangsöffnung D fluchtende Öffnung 18 der Zwischenwand 8 in die zweite Kammer 5 geführt ist, mit dem ersten Dichtelement 6 gekoppelt, wobei ein vom ersten Dichtelement 6 in Richtung auf das zweite Dichtelement 9 abragender Bolzen 17 beweglich in der Hülse 16 geführt ist.

Die Länge der Hülse 16 entlang der Erstreckungsrichtung R ist nun so bemessen, dass beim Bewegen des Ventilstiftes V in die zweite Reinigungsstellung das erste Dichtelement 6 bei seiner Bewegung in Richtung auf die Zwischenwand 8 gegen die Hülse 16 stößt und somit das zweite Dichtelement 9 mitnimmt, wobei das zweite Dichtelement 9 zur Anlage an die Oberseite 15 des Gehäuses G gelangt, wenn das erste Dichtelement 6 vom Boden 3 her an der Zwischenwand 8 anschlägt.

Zum Bewegen des Ventilstiftes V aus der zweiten Reinigungsstellung zurück in die Entlüftungsstellung muss nun lediglich noch die dritte Kammer 7 durch eine der dritten Kammer 7 zugeordnete Einlassöffnung 23 des Gehäuses G mit einem Strömungsmittel befüllt werden. Dabei ist die der dritten Kammer 7 zugeordnete Einlassöffnung 23 so angeordnet, dass durch die Einlassöffnung 23 eingeleitetes Strömungsmittel die der Oberseite 15 des Gehäuses G zugewandte Seite des zweiten Dichtelementes 9 mit Druck beaufschlagt, so dass das zweite Dichtelement 9 entlang der Erstreckungsrichtung R zur Zwischenwand 8 hin verlagert wird, bis es an diese anschlägt. Hierbei drückt die Hülse 16 das erste Dichtelement 6 in Richtung auf den Boden 3, wobei der Ventilstift V in die Entlüftungsstellung mitgenommen wird. Nach dieser Verlagerung des ersten Dichtelementes 6 haben die erste und die zweite Kammer 4, 5 wieder ein Volumen vergleichbarer Größenordnung. Ein erneutes Beaufschlagen der zweiten Kammer 5 mit Druck führt nun wieder zu einer Bewegung des Ventilstiftes V in die erste Reinigungsposition, wie oben beschrieben.

## Patentansprüche

1. Entlüftungsvorrichtung zum Entlüften einer mit Spritzgussmaterial befüllbaren Kavität (I) einer Spritzgussform (F) über eine Entlüftungsöffnung (O) der Spritzgussform (F), mit
- einem eine Durchgangöffnung (D) aufweisenden Gehäuse (G), das zur Anordnung an einer Spritzgussform (F) eingerichtet und vorgesehen ist, derart, dass in der Kavität (I) befindliche Luft, die beim Einleiten von Spritzgussmaterial in die Kavität (I) aus einer Entlüftungsöffnung (O) der Spritzgussform (F) austritt, durch die Durchgangsöffnung (D) des Gehäuses (G) hindurch in einen die Spritzgussform (F) umgebenden Außenraum (A) entweichen kann,
- einem entlang einer Erstreckungsrichtung (R) längs erstreckten Ventilstift (V), der entlang seiner Erstreckungsrichtung (R) bewegbar am Gehäuse (G) gelagert ist,
- wobei der Ventilstift (V) dazu ausgebildet ist, aus einer Entlüftungsstellung, in der der Ventilstift (V) derart in der Durchgangsöffnung (D) angeordnet ist, dass aus der Entlüftungsöffnung (O) der Spritzgussform (F) austretende Luft entlang des Ventilstifts (V) durch die Durchgangsöffnung (D) hindurch in den Außenraum (A) entweichen kann, in Richtung auf die Kavität (I) in eine erste Reinigungsstellung bewegt zu werden, in der in die Durchgangsöffnung (D) gelangtes Spritzgussmaterial vom Ventilstift (V) mitgenommen und aus der Durchgangsöffnung (D) heraus befördert wird,
**dadurch gekennzeichnet, dass**
der Ventilstift (V) dazu ausgebildet ist, aus der ersten Reinigungsstellung von der Kavität (I) weg in eine zweite Reinigungsstellung bewegt zu werden, in der an dem Ventilstift (V) anhaftendes Spritzgussmaterial durch ein am Gehäuse (G) vorgesehenes Abstreifelement (S) vom Ventilstift (V) abgestreift wird.

2. Entlüftungsvorrichtung nach Anspruch 1, **dadurch gekennzeichnet, dass** der Ventilstift (V) entlang seiner Erstreckungsrichtung (R) in einen Hauptabschnitt (10) und einem gegenüber dem Hauptabschnitt (10) im Querschnitt reduzierten freien Endabschnitt (11) unterteilt ist.

3. Entlüftungsvorrichtung nach Anspruch 2, **dadurch gekennzeichnet, dass** der Ventilstift (V) - bezogen auf einen bestimmungsgemäß an der Spritzgussform (F) angeordneten Zustand der Entlüftungsvorrichtung (1) - dazu ausgebildet ist, in seiner Entlüftungsstellung soweit entlang seiner Erstreckungsrichtung (R) aus der Durchgangsöffnung (D) herauszustehen, dass sein freier Endabschnitt (11) in der Entlüftungsöffnung (O) angeordnet ist.

4. Entlüftungsvorrichtung nach Anspruch 2 oder 3, **dadurch gekennzeichnet, dass** der freie Endabschnitt (11) in der Entlüftungsstellung des Ventilstifts (V) - bezogen auf einen bestimmungsgemäß an der Spritzgussform (F) angeordneten Zustand der Entlüftungsvorrichtung (1) - nicht in die Kavität (I) hineinragt.

5. Entlüftungsvorrichtung nach einem der Ansprüche 2 bis 4, **dadurch gekennzeichnet, dass** der freie Endabschnitt (11) des Ventilstifts (V) in seiner ersten Reinigungsstellung - bezogen auf einen bestimmungsgemäß an der Spritzgussform (F) angeordneten Zustand der Entlüftungsvorrichtung (1) - so weit entlang seiner Erstreckungsrichtung (R) aus der Durchgangsöffnung (D) heraus steht, dass er vollständig in der Kavität (I) angeordnet ist.

6. Entlüftungsvorrichtung nach einem der Ansprüche 2 bis 5, **dadurch gekennzeichnet, dass** der Hauptabschnitt (10) des Ventilstifts (V) zumindest einen Bereich aufweist, der beim Bewegen des Ventilstiftes (V) in die erste Reinigungsstellung durch die Durchgangsöffnung (D) hindurch bewegt wird, wobei der mindestens eine Bereich einen der Durchgangsöffnung (D) entsprechenden Querschnitt aufweist.

7. Entlüftungsvorrichtung nach einem der vorhergehenden Ansprüche, **dadurch gekennzeichnet, dass** die Durchgangsöffnung (D) in einem Boden (3) des Gehäuses (G) ausgebildet ist, über den das Gehäuse (G) insbesondere an der Spritzgussform (F) befestigbar ist, wobei insbesondere am Boden (3) eine mit der Durchgangsöffnung (D) kommunizierende, quer zur Erstreckungsrichtung (R) verlaufende Auslassöffnung (20) ausgebildet ist, die in einem an der Spritzgussform (F) bestimmungsgemäß angeordneten Zustand der Entlüftungsvorrichtung (1) außerhalb der Kavität (I) mündet.

8. Entlüftungsvorrichtung nach einem der Ansprüche 2 bis 7, **dadurch gekennzeichnet, dass** der Ventilstift (V) dazu ausgebildet ist, beim Bewegen in die zweite Reinigungsstellung zum Abstreifen von am Endabschnitt (11) des Ventilstiftes (V) haftendem Spritzgussmaterial mit seinem Endabschnitt (11) vollständig am Abstreifelement (S) vorbeibewegt zu werden.

9. Entlüftungsvorrichtung nach einem der vorhergehenden Ansprüche, **gekennzeichnet durch** eine erste und eine zweite mit einem Strömungsmittel beaufschlagbare Kammer (4, 5) des Gehäuses (G), die **durch** ein entlang der Erstreckungsrichtung (R) gleitend im Gehäuse (G) geführtes erstes Dichtelement (6) voneinander getrennt sind, wobei insbesondere der Ventilstift (V) am ersten Dichtelement (6) festgelegt ist.

10. Entlüftungsvorrichtung nach Anspruch 9, **dadurch gekennzeichnet, dass** das erste Dichtelement (6) bei einem in der Entlüftungsstellung befindlichen Ventilstift (V) beim Beaufschlagen der zweiten Kammer (5) mit einem Strömungsmittel entlang der Erstreckungsrichtung (R) zum Boden (3) hin verlagert wird, wobei der Ventilstift (V) in seine erste Reinigungsstellung mitgenommen wird.

11. Entlüftungsvorrichtung nach Anspruch 9 oder 10, **gekennzeichnet durch** eine dritte Kammer (7) des Gehäuses (G), die **durch** eine Zwischenwand (8) von der zweiten Kammer (5) getrennt ist, wobei ein zweites Dichtelement (9) entlang der Erstreckungsrichtung (R) gleitend in der dritten Kammer (7) geführt ist.

12. Entlüftungsvorrichtung nach Anspruch 9 und Anspruch 11, **dadurch gekennzeichnet, dass** das erste Dichtelement (6) bei einem in der ersten Reinigungsstellung befindlichen Ventilstift (V) beim Beaufschlagen der ersten Kammer (4) mit einem Strömungsmittel entlang der Erstreckungsrichtung (R) in Richtung auf die Zwischenwand (8) verlagert wird, wobei der Ventilstift (V) in seine zweite Reinigungsstellung mitgenommen wird.

13. Entlüftungsvorrichtung nach Anspruch 9, 11 oder 12, **dadurch gekennzeichnet, dass** das zweite Dichtelement (9) derart mit dem ersten Dichtelement (6) gekoppelt ist, dass das zweite Dichtelement (9) zu einer der Zwischenwand (8) entlang der Erstreckungsrichtung (R) gegenüberliegenden Oberseite (15) des Gehäuses (G) verlagert wird, wenn das erste Dichtelement (6) bei einem in der ersten Reinigungsstellung befindlichen Ventilstift (V) beim Beaufschlagen der ersten Kammer (4) mit einem Strömungsmittel entlang der Erstreckungsrichtung (R) in Richtung auf die Zwischenwand (8) verlagert wird, wobei insbesondere das zweite Dichtelement (9) bei einem in der zweiten Reinigungsstellung befindlichen Ventilstift (V) beim Beaufschlagen der dritten Kammer (7) mit einem Strömungsmittel von der Oberseite (15) in Richtung auf die Zwischenwand (8) verlagert wird, wobei das erste Dichtelement (6) aufgrund der Kopplung zwischen den beiden Dichtelementen (6, 9) von der Zwischenwand (8) in Richtung auf den Boden (3) verlagert wird, so dass der Ventilstift (V) in seine Entlüftungsstellung mitgenommen wird.

14. Verfahren zum Entlüften einer mit Spritzgussmaterial befüllbaren Kavität (I) einer Spritzgussform (F) über eine Entlüftungsöffnung (O) der Spritzgussform (F), insbesondere unter Verwendung einer Entlüftungsvorrichtung (1) nach einem der vorhergehenden Ansprüche, umfassend die Schritte:
- Anordnen eines eine Durchgangsöffnung (D) aufweisenden Gehäuses (G) der Entlüftungsvorrichtung (1) bezüglich der Entlüftungsöffnung (O) der Spritzgussform (F), zum Verbinden jener Durchgangsöffnung (D) mit der Entlüftungsöffnung (O) der Spritzgussform (F), so dass aus der Entlüftungsöffnung (O) austretende Luft durch die Durchgangsöffnung (D) hindurch in einen die Spritzgussform (F) umgebenden Außenraum (A) gelangen kann,
- Anordnen eines Ventilstiftes (V) in einer Entlüftungsstellung, so dass beim Einleiten von Spritzgussmaterial in die Kavität (I) Luft durch die Entlüftungsöffnung (O) aus der Kavität (I) austreten und entlang des Ventilstifts (V) durch die Durchgangsöffnung (D) hindurch in den Außenraum (A) entweichen kann,
- Bewegen des Ventilstifts (V) aus der Entlüftungsstellung in Richtung auf die Kavität (I) in seine erste Reinigungsstellung nach dem Befüllen der Kavität (I) mit Spritzgussmaterial, so dass in die Durchgangsöffnung (D) gelangtes Spritzgussmaterial vom Ventilstift (V) mitgenommen und aus der Durchgangsöffnung (D) heraus befördert wird, und
- Bewegen des Ventilstifts (V) aus der ersten Reinigungsstellung von der Kavität (I) weg in die zweite Reinigungsstellun, wobei an dem Ventilstift (V) anhaftendes Spritzgussmaterial durch ein Abstreifelement (S) vom Ventilstift (V) abgestreift wird.

15. Verfahren nach Anspruch 14, **dadurch gekennzeichnet, dass** die Kavität (I) über die Entlüftungsvorrichtung (1) evakuiert wird.

## Claims

1. Venting device for venting a cavity (I) of an injection mold (F) via a venting opening (O) of the injection mold (F) which cavity (I) can be filled with an injection molding material, having
- a housing (G) which has a through-opening (D) and is designed and intended for an arrangement on an injection mold (F) in such a way that air which is present in the cavity (I) and which escapes from a venting opening (O) of the injection mold (F) when injection molding material is introduced into the cavity (I) can exhaust through the through-opening (D) of the housing (G) into an exterior space (A) surrounding the injection mold (F),
- a valve pin (V) extending longitudinally along a direction of extent (R) and being mounted in the housing (G) movably along its direction of extent (R),
- wherein the valve pin (V) is designed for being moved from a venting position, in which the valve pin (V) is arranged in the through-opening (D) in such a way that air escaping from the venting opening (O) of the injection mold (F) can exhaust into the exterior space (A) along the valve pin (V) through the through-opening (D), in the direction of the cavity (I) into a first cleaning position, with injection molding material gotten into the through-opening (D) being taken along by the valve pin (V) and being transported out of the through-opening (D),
**characterized**
**in that** the valve pin (V) is designed for being moved from the first cleaning position away from the cavity (I) into a second cleaning position, with injection molding material sticking to the valve pin (V) being wiped off the valve pin (V) by a wiping element (S) provided on the housing (G).

2. Venting device according to claim 1, **characterized in that** the valve pin (V) is divided along its direction of extent (R) into a main section (10) and a free end section (11) which has a reduced cross-section with respect to the main section (10).

3. Venting device according to claim 2, **characterized in that** the valve pin (V) is - with respect to an intended state of the venting device (1) arranged at the injection mold (F) - designed such that it sticks out of the through-opening (D) thus far along its direction of extension (R) that its free end section (11) is arranged in the venting opening (O).

4. Venting device according to claim 2 or 3, **characterized in that** the free end section (11) does not - with respect to an intended state of the venting device (1) arranged at the injection mold (F) - extend into the cavity (I) in the venting position of the valve pin (V).

5. Venting device according to any of claims 2 to 4, **characterized in that** the free end section (11) of the valve pin (V) sticks in its first cleaning position - with respect to an intended state of the venting device (1) arranged at the injection mold (F) - out of the through-opening (D) thus far along its direction of extent (R) that it is completely arranged in the cavity (I).

6. Venting device according to any of claims 2 to 5, **characterized in that** the main section (10) of the valve pin (V) has at least one area which is moved through the through-opening (D) during the movement of the valve pin (V) into the first cleaning position, wherein the at least one area has a cross-section corresponding to the through-opening (D).

7. Venting device according to any of the preceding claims, **characterized in that** the through-opening (D) is formed in a bottom (3) of the housing (G) via which the housing (G) can be fixed particularly at the injection mold (F), wherein particularly an outlet opening (20) communicating with the through-opening (D) and extending across the direction of extent (R) is designed at the bottom (3) which outlet opening (20) ends out of the cavity (I) in an intendedly arranged state of the venting device (1) at the injection mold (F).

8. Venting device according to any of claims 2 to 7, **characterized in that** the valve pin (V) is designed to be moved with its end section (11) completely past the wiping element (S) during the movement into the second cleaning position to wipe off injection molding material sticking to the end section (11) of the valve pin (V).

9. Venting device according to any of the preceding claims, **characterized by** a first and a second chamber (4, 5) of the housing (G) which can be charged with a flow means and which are separated from each other by a first sealing element (6) guided slidingly in the housing (G) along the direction of extent (R), wherein particularly the valve pin (V) is secured to the first sealing element (6).

10. Venting device according to claim 9, **characterized in that** the first sealing element (6) is displaced along the direction of extent (R) towards the bottom (3) in case of a valve pin being in the venting position during charging the second chamber (5) with a flow means, wherein the valve pin (V) is taken along into its first cleaning position.

11. Venting device according to claim 9 or 10, **characterized by** a third chamber (7) of the housing (G) which is separated from the second chamber (5) by an intermediate wall (8), wherein a second sealing element (9) is guided slidingly along the direction of extent (R) in the third chamber (7).

12. Venting device according to claim 9 and claim 11, **characterized in that** the first sealing element (6) is displaced along the direction of extent (R) in the direction of the intermediate wall (8) in case of a valve pin (V) being in the first cleaning position during charging the first chamber (4) with a flow means, wherein the valve pin (V) is taken along into its second cleaning position.

13. Venting device according to claim 9, 11 or 12, **characterized in that** the second sealing element (9) is coupled to the first sealing element (6) in such a way that the second sealing element (9) is displaced towards an upper side (15) of the housing (G) lying along the direction of extent (R) opposite the intermediate wall (8), when the first sealing element (6) is displaced along the direction of extent (R) in the direction of the intermediate wall (8) in case of a valve pin (V) being in the first cleaning position during charging the first chamber (4) with a flow means, wherein particularly the second sealing means (9) is displaced from the upper side (15) in the direction of the intermediate wall (8) in case of a valve pin (V) being in the second cleaning position during charging the third chamber (7) with a flow means, wherein the first sealing element (6) is displaced from the intermediate wall (8) in the direction of the bottom (3) due to the coupling between the two sealing elements (6, 9) so that the valve pin (V) in taken along into its venting position.

14. Method for venting a cavity (I) of an injection mold (F) via a venting opening (O) of the injection mold (F) which cavity (I) can be filled with an injection molding material, in particular by using a venting device (1) according to any of the preceding claims, comprising the steps of:
- arranging a housing (G) having a through-opening (D) of the venting device (1) with respect to the venting opening (O) of the injection mold (F) to connect that through-opening (D) to the venting opening (O) of the injection mold (F) so that air escaping from the venting opening (O) can get through the through-opening (D) into an exterior space (A) surrounding the injection mold (F),
- arranging a valve pin (V) in a venting position so that air can escape from the cavity (I) through the venting opening (O) and can exhaust along the valve pin (V) through the through-opening (O) into the exterior space (A) when injection molding material is introduced into the cavity (I),
- moving the valve pin (V) from the venting position in the direction of the cavity (I) into its first cleaning position after filling the cavity (I) with injection molding material so that injection molding material gotten into the through-opening (D) is taken along by the valve pin (V) and is transported out of the through-opening (D), and
- moving the valve pin (V) from the first cleaning position from the cavity (I) away into the second cleaning position, wherein injection molding material sticking to the valve pin (V) is wiped off the valve pin (V) by a wiping element (S).

15. Method according to claim 14, **characterized in that** the cavity (I) is being evacuated via the venting device (1).

## Revendications

1. Dispositif d'aération pour aérer une cavité (I) d'un moule de coulée par injection (F) susceptible d'être remplie avec un matériau à couler par injection via une ouverture d'aération (O) du moule de coulée par injection (F), comprenant
- un boîtier (G) qui comporte une ouverture traversante (D) et qui est conçu et prévu pour être agencé sur un moule de coulée par injection (F), de telle façon que l'air se trouvant dans la cavité (I), qui sort hors d'une ouverture d'aération (O) du moule de coulée par injection (F) lors de l'entrée de matériau à couler par injection dans la cavité (I), est capable de s'échapper à travers l'ouverture traversante (D) du boîtier (G) jusque dans un volume extérieur (A) qui entoure le moule de coulée par injection (F),
- un pointeau de valve (V) qui s'étend le long d'une direction d'extension (R) et qui est monté sur le boîtier (G) de manière déplaçable le long de sa direction d'extension (R),
- dans lequel le pointeau de valve (V) est réalisé pour être déplacé à partir d'une position d'aération, en direction de la cavité (I) jusque dans une première position de nettoyage, dans lequel la position d'aération est la position, dans laquelle le pointeau de valve (V) est agencé dans l'ouverture traversante (D) de telle façon que l'air qui sort hors de l'ouverture d'aération (O) du moule de coulée par injection (F) est capable de s'échapper le long du pointeau de valve (V) en traversant l'ouverture traversante (D) jusque dans le volume extérieur (A), et dans lequel la première position de nettoyage est la position, dans laquelle le matériau à couler par injection qui est parvenu dans l'ouverture traversante (D) est entraîné par le pointeau de valve (V) et est convoyé hors de l'ouverture traversante (D),
**caractérisé en ce que**
le pointeau de valve (V) est réalisé pour être déplacé hors de la première position de nettoyage en éloignement de la cavité (I) jusque dans une seconde position de nettoyage dans laquelle le matériau à couler par injection qui adhère sur le pointeau de valve (V) est raclé depuis le pointeau de valve (V) par un élément racleur (S) prévu sur le boîtier (G).

2. Dispositif d'aération selon la revendication 1, **caractérisé en ce que** le pointeau de valve (V) est subdivisé le long de sa direction d'extension (R) en un tronçon principal (10) et en un tronçon terminal libre (11) réduite en section par rapport au tronçon principal (10).

3. Dispositif d'aération selon la revendication 2, **caractérisé en ce que** le pointeau de valve (V) est réalisé, par référence à un état du dispositif d'aération (1) agencé contre le moule de coulée par injection (F) conformément à sa destination, pour dépasser dans sa position d'aération hors de l'ouverture traversante (D) le long de sa direction d'extension (R) de telle façon que son tronçon terminal libre (11) soit agencé dans l'ouverture d'aération (O).

4. Dispositif d'aération selon la revendication 2 ou 3, **caractérisé en ce que** le tronçon terminal libre (11), dans la position d'aération du pointeau de valve (V), par référence à un état du dispositif d'aération (1) agencé contre le moule de coulée par injection (F) conformément à sa destination, ne pénètre pas dans la cavité (I).

5. Dispositif d'aération selon l'une d'revendication 2 à 4, **caractérisé en ce que** le tronçon terminal libre (11) du pointeau de valve (V), dans sa première position de nettoyage, par référence à un état du dispositif d'aération (1) agencé contre le moule de coulée par injection (F) conformément à sa destination, dépasse hors de l'ouverture traversante (D) le long de sa direction d'extension (R) de telle façon qu'il soit entièrement agencé dans la cavité (I).

6. Dispositif d'aération selon l'une des revendications 2 à 5, **caractérisé en ce que** le tronçon principal (10) du pointeau de valve (V) comprend au moins une portion qui, lors du déplacement du pointeau de valve (V) vers la première position de nettoyage, est déplacée à travers l'ouverture traversante (D), et ladite au moins une portion présente une section transversale correspondant à l'ouverture traversante (D).

7. Dispositif d'aération selon l'une des revendications précédentes, **caractérisé en ce que** l'ouverture traversante (D) est ménagée dans un fond (3) du boîtier (G), via lequel le boîtier (G) est susceptible d'être fixé, en particulier contre le moule de coulée par injection (F), et dans lequel une ouverture de sortie (20), qui communique avec l'ouverture traversante (D) et qui s'étend transversalement à la direction d'extension (R), est ménagée en particulier dans le fond (3), et ladite ouverture de sortie (20), dans un état du dispositif d'aération (1) agencé contre le moule de coulée par injection (F) conformément à sa destination, débouche à l'extérieur de la cavité (I).

8. Dispositif d'aération selon l'une des revendications 2 à 7, **caractérisé en ce que** le pointeau de valve (V) est réalisé, lors du déplacement vers la seconde position de nettoyage, pour être déplacé avec son tronçon terminal (11) entièrement le long de l'élément racleur (S) afin de racler le matériau à couler par injection qui adhère au tronçon terminal (11) du pointeau de valve (V).

9. Dispositif d'aération selon l'une des revendications précédentes, **caractérisé par** une première chambre et une seconde chambre (4, 5) du boîtier (G), qui peuvent être alimentées avec un agent en écoulement et qui sont séparées l'une de l'autre par un premier élément d'étanchéité (6) guidé en coulissement dans le boîtier (G) le long de la direction d'extension (R), et le pointeau de valve (V) est en particulier fixé sur le premier élément d'étanchéité (6).

10. Dispositif d'aération selon la revendication 9, **caractérisé en ce que** le premier élément d'étanchéité (6), lorsque le pointeau de valve (V) se trouve dans la position d'aération et lors de l'alimentation de la seconde chambre (5) avec un agent en écoulement, est déplacé le long de la direction d'extension (R) en direction du fond (3), et le pointeau de valve (V) est entraîné conjointement vers sa première position de nettoyage.

11. Dispositif d'aération selon la revendication 9 ou 10, **caractérisé par** une troisième chambre (7) du boîtier (G), qui est séparée par une paroi intermédiaire (8) de la seconde chambre (5), et dans lequel un second élément d'étanchéité (9) est guidé dans la troisième chambre (7) en coulissement le long de la direction d'extension (R).

12. Dispositif d'aération selon la revendication 9 et 11, **caractérisé en ce que** le premier élément d'étanchéité (6), lorsque le pointeau de valve (V) se trouve dans la première position de nettoyage et lors de l'alimentation de la première chambre (4) avec un agent en écoulement, est déplacé le long de la direction d'extension (R) en direction de la paroi intermédiaire (8), et le pointeau de valve (V) étant entraîné conjointement vers sa seconde position de nettoyage.

13. Dispositif d'aération selon la revendication 9, 11 ou 12, **caractérisé en ce que** le second élément d'étanchéité (9) est couplé au premier élément d'étanchéité (6) de telle façon que le second élément d'étanchéité (9) est déplacé vers une face supérieure (15) du boîtier (G), opposée à la paroi intermédiaire (8) le long de la direction d'extension (R) quand le premier élément d'étanchéité (6), lorsque le pointeau de valve (V) se trouve dans la première position de nettoyage et lors de l'alimentation de la première chambre (4) avec un agent en écoulement, est déplacé le long de la direction d'extension (R) en direction de la paroi intermédiaire (8), et en particulier le second élément d'étanchéité (9), lorsque le pointeau de valve (V) se trouve dans la seconde position de nettoyage et lors de l'alimentation de la troisième chambre (7) avec un agent en écoulement, étant déplacé depuis la face supérieure (15) en direction de la paroi intermédiaire (8), et dans lequel le premier élément d'étanchéité (6) est déplacé depuis la paroi intermédiaire (8) en direction du fond (3) en raison de l'accouplement entre les deux éléments d'étanchéité (6, 9), de sorte que le pointeau de valve (V) est entraîné vers sa position d'aération.

14. Procédé pour aérer une cavité (I) d'un moule de coulée par injection (F) susceptible d'être remplie avec un matériau à couler par injection, via une ouverture d'aération (O) du moule de coulée par injection (F), en particulier en utilisant un dispositif d'aération (1) selon l'une des revendications précédentes, comprenant les étapes consistant à :
- agencer un boîtier (G), comportant une ouverture traversante (D), du dispositif d'aération (1) par rapport à l'ouverture d'aération (O) du moule de coulée par injection (F), afin de relier ladite ouverture traversante (D) avec l'ouverture d'aération (O) du moule de coulée par injection (F), de telle façon que l'air sortant de l'ouverture d'aération (O) en traversant l'ouverture traversante (D) est capable de parvenir dans un volume extérieur (A) entourant le moule de coulée par injection (F),
- agencer un pointeau de valve (V) dans une position d'aération, de telle façon que lors de l'entrée de matériau à couler par injection dans la cavité (I), l'air est capable de sortir hors de la cavité (I) à travers l'ouverture d'aération (O) et s'échapper vers le volume extérieur (A) le long du pointeau de valve (V) en traversant l'ouverture traversante (D),
- déplacer le pointeau de valve (V) hors de la position d'aération en direction de la cavité (I) jusque dans sa première position de nettoyage, après remplissage de la cavité (I) avec le matériau à couler par injection, de sorte que le matériau à couler par injection qui est parvenu dans l'ouverture traversante (D) est entraîné par le pointeau de valve (V) et est convoyé hors de l'ouverture traversante (D), et
- déplacer le pointeau de valve (V) hors de la première position de nettoyage en éloignement de la cavité (I) jusque dans la seconde position de nettoyage, dans lequel le matériau à couler par injection qui adhère sur le pointeau de valve (V) est raclé depuis le pointeau de valve (V) par un élément racleur (S).

15. Procédé selon la revendication 14, **caractérisée en ce que** la cavité (I) est évacuée via le dispositif d'aération (1).
